# EUROPÄISCHE PATENTANMELDUNG

(11) **EP 3 863 121 A2**
(43) Veröffentlichungstag der Anmeldung: **11.08.2021**
(21) Anmeldenummer: 21155320.1
(22) Anmeldetag: 04.02.2021
(51) Int. Cl.: H01R 4/44, H02G 7/00, H01R 4/62

(54) **SEILVERBINDUNG INSBESONDERE EINER ELEKTRISCHEN FREILEITUNG SOWIE SET BESTEHEND AUS MEHREREN SEILKLEMMEN**

(30) Priorität: 07.02.2020 DE 102020201537
(71) Anmelder: Richard Bergner Holding GmbH & Co. KG, 91126 Schwabach (DE)
(72) Erfinder: ZEMKE, Simon, 91126 Rednitzhembach (DE); DANSACHMÜLLER, Mario, 91126 Schwabach (DE); KRISPIN, Hans-Jörg, 91126 Schwabach (DE)
(74) Vertreter: FDST Patentanwälte

(57) **Zusammenfassung**

Die Seilverbindung (10) insbesondere einer elektrischen Freileitung (14) dient zur mechanischen und elektrischen Verbindung zwischen zwei Leiterseilen (12, 44) mit Hilfe von mehreren Seilklemmen (18), wobei jedes der Leiterseile (12, 44) zumindest zwei konzentrisch zueinander angeordnete Lagen an Drähten aufweisen, nämlich zumindest eine Innenlage (22A, B, C) und eine Außenlage (24), wobei über zumindest eine der Seilklemmen (18) die zumindest eine Innenlage (22A, B, C) des einen Leiterseils (12,44) geklemmt und über die Seilklemme (18) unmittelbar mit dem anderen Leiterseil (12,44) elektrisch verbunden ist. Hierdurch ist unter anderem eine homogene Stromverteilung über die mehreren Lagen der Leiterseile (12) im Bereich der Seilverbindung (10) erreicht.

## Beschreibung

Die Erfindung betrifft eine Seilverbindung insbesondere einer elektrischen Freileitung mit den Merkmalen des Oberbegriffs des Anspruchs 1 sowie ein Set bestehend aus mehreren Seilklemmen für eine derartige Seilverbindung.

Freileitungen dienen dem Transport von elektrischer Energie. Es wurden im letzten Jahrhundert unterschiedlichste Freileitungen in den verschiedensten Spannungsebenen errichtet. Aus verschiedenen Gründen (z. B. Liberalisierung des Strommarktes, Stilllegung von alten Kraftwerken, Einspeisung von Energie aus Windkraftwerken) haben sich in der jüngeren Vergangenheit die Lastflüsse in den Hochspannungsnetzen gravierend verändert. Dabei ist festzustellen, dass die Auslastung des Netzes ständig steigt, so dass die Betriebsströme zeitweise in Leitungen des Netzes die zulässigen Ströme erreichen. Aufgrund neuer Leitertypen, wie beispielsweise HTLS (Hochtemperaturleiterseile), sind auch die Anforderungen, an die zur Verbindung der Leiterseile verwendeten Armaturen erheblich größer geworden. Um einen durchgehenden Leiter zu erreichen, müssen bei der Montage einer Freileitung aufgrund der begrenzten Längen der beispielsweise auf Trommeln bereitgestellten Leiterseile diese über eine Seilverbindung miteinander verbunden werden.

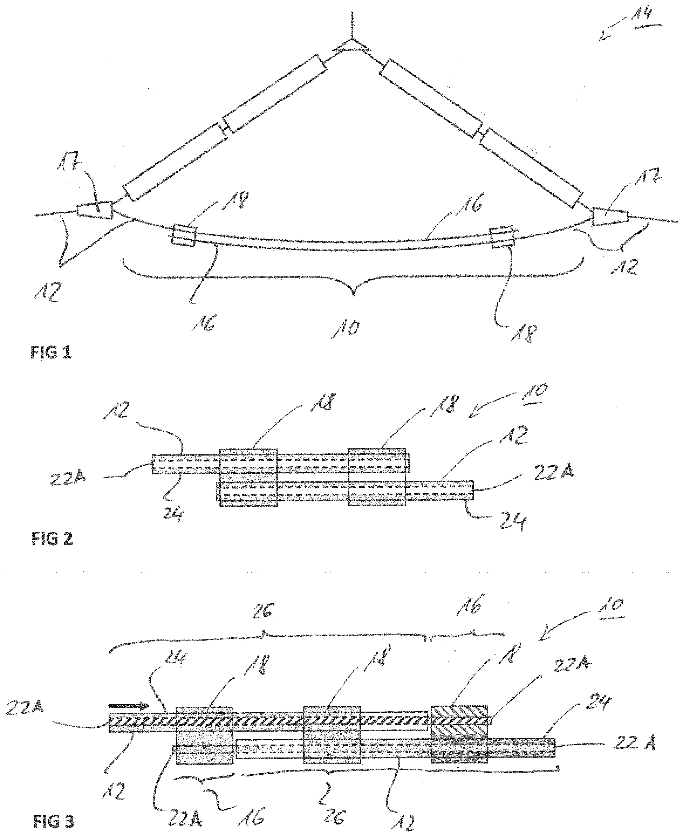

Zur Seilverbindung zweier Leiterseile ist grundsätzlich die in Fig.1 dargestellte Seilverbindung nach Art einer Schlaufenverbindung mit Hilfe von Seilklemmen, sogenannten Schalenstromklemmen bekannt.

Bei dieser Seilverbindung 10 werden zwei Leiterseile 12 von zwei aufeinanderfolgenden Abspannabschnitten einer elektrischen (Frei-)Leitung 14 elektrisch miteinander verbunden. Hierzu werden Endbereiche 16 der beiden Leiterseile 12 über mehrere Seilklemmen 18 elektrisch und mechanisch miteinander verbunden. In einer in Deutschland häufig vorkommenden Variante werden die Seilenden ungeschnitten durch Abspannklemmen 17 geführt. In der dadurch gebildeten, zugentlasteten Stromschlaufe überlappen dabei die beiden Seilenden über einen Bereich von mehreren Metern. Die beiden Leiterseile 12 werden mindestens an den Enden des Überlappungsbereiches mit den als Schalenstromklemmen ausgebildeten Seilklemmen 18 elektrisch leitend miteinander verbunden. Die beiden Abspannklemmen 17 und damit die Seilverbindung 10 ist über eine Abspanneinrichtung an einem nicht näher dargestellten Aufhängepunkt, beispielsweise an einem Freileitungsmast befestigt.

Die Leiterseile 12 sind in der Regel als Spiralseile aus konzentrisch in mehreren Lagen verseilten Drähten aufgebaut. Die Drähte bestehen typischerweise aus Aluminium. Diese bilden an ihrer Oberfläche eine Oxidschicht aus, welche bei der Seilverbindung zu Problemen und beispielsweise zu einer thermischen Belastung führen kann, da der Strom über sogenannte Querkontakte von dem einen Leiterseil 12 in das andere Leiterseil 12 übergehen muss.

Ausgehend hiervon liegt der Erfindung die Aufgabe zu Grunde, bei einer Seilverbindung insbesondere einer Freileitung eine gute elektrische Verbindung zwischen den beiden zu verbindenden Leiterseilen zu gewährleisten.

Die Aufgabe wird gemäß der Erfindung gelöst durch eine Seilverbindung insbesondere einer elektrischen Freileitung zwischen zwei Leiterseilen mit Hilfe von mehreren Seilklemmen, wobei jedes der Leiterseile zumindest zwei konzentrisch zueinander angeordnete Lagen an Drähten aufweist, nämlich zumindest eine Innenlage und eine Außenlage, wobei über zumindest eine der Seilklemmen die zumindest eine Innenlage des einen Leiterseils geklemmt und über die Seilklemme unmittelbar mit dem anderen Leiterseil elektrisch verbunden ist.

Bei den Leiterseilen handelt es sich allgemein um in mehreren Lagen miteinander verseilte blanke elektrisch leitende (Metall-) Drähte, also ohne Drahtisolierung. Speziell werden Aluminiumdrähte eingesetzt.

Die Seilklemmen sind insbesondere nach Art von sogenannten Parallelkanalklemmen ausgebildet, bei denen zwei Klemmkanäle parallel zur Längsrichtung der Leiterseile und nebeneinander angeordnet sind. Bei diesen Seilklemmen wird daher unmittelbar eine Innenlage des einen Leiterseils elektrisch mit dem anderen Leiterseil verbunden. Mit der Seilklemme wird daher die Innenlage direkt geklemmt, im Klemmbereich sind daher die Außenlage und ggf. weitere Innenlagen entfernt, um die unmittelbare Klemmung der Innenlage zu ermöglichen.

Durch diese Ausgestaltung wird der besondere Vorteil erzielt, dass der Strom von den Drähten der Innenlage nicht über Querströme zunächst über die Außenlage nach außen geleitet werden muss. Durch die unmittelbare Klemmung der Innenlage sind die elektrischen Widerstände geringer und damit die elektrische Kontaktierung verbessert. Weiterhin ist hierdurch die Stromverteilung auch homogen, da kein Ausweichen des Stroms von der Innenlage in die Außenlage erforderlich ist.

Diese Ausgestaltung beruht auf der Überlegung, dass zur Führung des Leiterstroms im Leiterseil zunächst der Leitquerschnitt aller verseilten (Aluminium) Drähte zur Verfügung steht. Durch die Vielzahl der Querkontakte der verseilten Drähte in einem ungestörten Abspannabschnitt der Freileitung vergleichmäßigt sich die Stromverteilung im Leitquerschnitt, so dass die Stromdichte in allen Aluminiumdrahtquerschnitten gleich und homogen ist. Im Bereich der Seil- oder Stromschlaufenverbindung bildet sich jedoch bei herkömmlichen Seilverbindungen notwendigerweise ein inhomogenes Strömungsfeld in den Drähten aus, weil der Strom von dem einen auf das andere Leiterseil übergeht. Dieses Strömungsfeld und die damit verbundenen Stromdichten in den Einzeldrähten hängen von den elektrischen Querwiderständen zwischen den Einzeldrähten ab. Der Werkstoff Aluminium bildet bekanntermaßen an Oberflächen sehr schnell eine passivierende Oxidschicht. Wenn Aluminiumdrähte längere Zeit der Witterung ausgesetzt sind und/oder während der Herstellung wärmebehandelt werden, wächst die Dicke der Oxidschicht. Die Oxidschichten und Schmutzablagerungen bilden nichtleitende Fremdschichten an den Drahtoberflächen. Diese Schichten behindern einen Stromübergang zwischen einzelnen Drahtlagen und wirken wie ein Querwiderstandsbelag. Selbst kleine Ströme über hohe Querwiderstände können zu hohen Verlustleistungen und damit verbunden zu thermischer Überbelastung an den Klemmen führen.

Bei der herkömmlichen Stromschlaufenverbindung mit den lediglich die Außenlagen der Leiterseile kontaktierenden Seilklemmen erfolgt der Fluss des Gesamtstroms über den Strompfad "äußere Drahtlage (Außenlage) des einen Leiterseils - Klemmstücke der Seilklemme - äußere Drahtlage (Außenlage) des zweiten Leiterseils". Der Strom der Innenlagen muss daher von den Innenlagen auf die Außenlagen übergehen, bzw. wieder in die Innenlagen übergehen. Die Kontaktierung der Innenlagen und damit die Beteiligung der Innenlagen an der Stromübertragung im unmittelbaren Bereich der Seilklemmen ist dabei stark von dem Querwiderstandsbelag zwischen den Leiterlagen abhängig. Bei der Montage der Seilklemmen werden typischerweise die Außenlagen der Leiterseile und die Leiterkanäle (Klemmkanäle) der Seilklemmen mit Drahtbürsten metallisch blank gebürstet, um die Oxidschichten aufzubrechen und eine gute elektrische Kontaktierung zwischen Leiterseil-Außenlagen und den Klemmstücken zu ermöglichen. Die innenliegenden Aluminiumdrahtlagen werden herkömmlich in der Regel wegen der schlechten Zugänglichkeit nicht gereinigt, so dass der oben beschriebene Querwiderstandsbelag resultierend aus den Querwiderständen zwischen den verseilten Drähten bei herkömmlichen Seilverbindungen hoch ist.

Mit steigendem Querwiderstand versucht der Strom diesen Widerstand zu umgehen, indem der Strom, welcher gemäß der entsprechenden Querschnittsflächenanteile in den inneren Leiterlagen fließt, bei herkömmlichen Seilverbindungen schon deutlich vor der eigentlichen Seilverbindung teilweise in die Außenlage des Leiterseils wechselt und sich dort konzentriert. Die daraus resultierende höhere Stromdichte in der Außenlage steigert die thermische Belastung des Seilabschnittes und der angrenzenden Armaturen sowie der Seilklemmen. Der verbleibende Strom der weiterhin in den inneren Leiterlagen bleibt und an den Klemmen von Innenlage auf Außenlage übergehen muss, erzeugt auf Grund des hohen Querwiderstandes unmittelbar an den Klemmen Leistungsverlustspitzen die wiederum eine zusätzliche thermische Belastung für die Klemmen darstellen.

Demzufolge konzentriert sich der Strom in der Außenlage des einen Leiterseils, geht über die Seilklemme auf das zweite Leiterseil über, und konzentriert sich dort (zunächst) wieder in der Außenlage. Bei großen Querwiderständen zwischen den Drahtlagen hat die Anzahl der für eine Seilverbindung verwendeten herkömmlichen Seilklemmen nur geringen Einfluss auf die Stromaufteilung in den einzelnen Lagen. Dieser Effekt beschränkt sich nicht auf Leiterseile mit zwei Drahtlagen, sondern kann bei beliebig viellagigen Leiterseilen auftreten. Bei drei- oder mehrlagigen Leiterseilen verstärkt sich der Effekt sogar, da die Querschnittsfläche der Außenlage im Verhältnis zu den Innenlagen kleiner wird und dadurch die Stromdichte bei großen Querwiderstandsbelägen im Leiterseil in der Außenlage noch stärker zunimmt.

Durch die erfindungsgemäße Ausgestaltung wird demgegenüber eine homogene Verteilung der Stromdichte über die einzelnen Lagen hinweg begünstigt, d.h. im Vergleich zu der herkömmlichen Seilverbindung wird eine Vergleichmäßigung der Stromdichte erreicht. Dadurch ist die Seilverbindung insbesondere auch für hohe Stromlasten sowie für Leiterseile mit erhöhten Querwiderständen zwischen den einzelnen Leiterseilen ausgebildet. Speziell ist die Seilverbindung für Leiterseile mit höheren zulässigen (Dauer-) Betriebstemperaturen (insbesondere >80°C) ausgebildet und es werden vorzugsweise derartige (HTLS) Leiterseile eingesetzt. Weiterhin ist eine Verringerung oder Vermeidung von Zwischenlagenströmen oder Querströmen zwischen den einzelnen Drähten und Lagen erreicht.

Die Seilverbindung wird bevorzugt bei einer elektrische Freileitung eingesetzt. Eine solche weist allgemein mehrere durch Seile gebildete Leiter auf, die zwischen Tragmasten abgespannt sind. Die beiden Leiterseile verlaufen - im Falle einer Schlaufenverbindung mit den zwei miteinander verbundenen Teilstücken (die beiden Leiterseile) des jeweiligen durchgehenden und abgespannten Seils - in Längsrichtung der Freileitung und überlappen sich im Bereich der Seilverbindung typischerweise über einen Bereich von zumindest 0,5m oder von zumindest 1m. Es sind typischerweise zumindest zwei Seilklemmen oder zwei Gruppen von Seilklemmen vorgesehen, wobei die eine Seilklemme (Gruppe von Seilklemmen) einen Endbereich des einen Leiterseils und einen Zwischenabschnitt des anderen Leiterseils klemmt.

Gemäß einer bevorzugten Ausgestaltung werden über zumindest eine der Seilklemmen unterschiedliche Lagen der beiden Leiterseile geklemmt und damit unmittelbar über die Seilklemme elektrisch miteinander kontaktiert. Durch diese Ausgestaltung wird also ein Stromfluss direkt über die Seilklemme zwischen unterschiedlichen Lagen der beiden Leiterseile bewirkt, was zusätzlich die gewünschte Vergleichmäßigung der Stromdichte im Bereich der Seilverbindung unterstützt.

Während beispielsweise bei einer ersten Ausführungsvariante ausschließlich gleiche Lagen der beiden Leiterseile über eine jeweilige Seilklemme miteinander kontaktiert werden, beispielsweise eine Innenlage mit einer Innenlage und eine Außenlage mit einer Außenlage, ist bei dieser zweiten Ausführungsvariante vorgesehen, dass unterschiedliche Lagen der beiden Leiterseile miteinander kontaktiert werden. Hierbei werden entweder ausschließlich unterschiedliche Lagen miteinander kontaktiert oder es werden ergänzend auch gleiche Lagen miteinander kontaktiert und damit Querströme zwischen den Lagen verringert.

In bevorzugter Ausgestaltung werden daher mehrere und vorzugsweise jede Lage des einen, ersten Leiterseils in dessen Endbereich jeweils über eine jeweilige Seilklemme geklemmt und über diese Seilklemme mit dem anderen, zweiten Leiterseil elektrisch kontaktiert. Vorzugsweise werden quasi symmetrisch hierzu auch mehrere und insbesondere alle Lagen des anderen, zweiten Leiterseils - in dessen Endbereich - ebenfalls über eine jeweilige weitere Seilklemme geklemmt und mit dem ersten Leiterseil elektrisch leitend verbunden. Durch diese Maßnahme werden daher individuell die einzelnen Lagen des jeweiligen Leiterseils über die Seilklemmen geklemmt und mit dem anderen Leiterseil verbunden. Es wird also jede (Aluminium-) Drahtlage der beiden zu verbindenden Leiterseile einzelnen mit einer jeweiligen Seilklemme geklemmt und mit dem jeweils anderen Leiterseil elektrisch kontaktiert.

Das zumindest eine Leiterseil wird daher in seinem Endbereich von mehreren Seilklemmen geklemmt, wobei die verschiedenen Seilklemmen unterschiedliche Lagen des einen Leiterseils klemmen und diese direkt mit dem anderen Leiterseil verbinden. Bevorzug erfolgt dies in gleicher Weise im Endbereich des anderen Leiterseils.

Die Seilverbindung ist dabei insbesondere nach einigen und vorzugsweise nach allen der folgenden Kriterien ausgebildet:
- vergleichbare Leitquerschnitte, also insbesondere vergleichbare Lagenquerschnitte werden über die Seilklemme miteinander elektrisch kontaktiert insbesondere derart, dass:
- die Stromverteilung in den Leitern der Seilverbindung möglichst gleichmäßig ist,
- die Stromdichte über alle Lagen möglichst gleichmäßig ist,
- Querströme möglichst über die Seilklemme fließen
- Querströme zwischen den einzelnen Drahtlagen außerhalb und innerhalb der Seilklemme möglichst gering sind

Die Seilklemmen weisen bevorzugt zwei parallel zueinander verlaufende Klemmkanäle zum Klemmen der beiden Leiterseile auf. Die Klemmkanäle bilden Klemmbereiche und sind an die Durchmesser der jeweiligen Lagen der zu verbindenden Leiterseile angepasst, um die Lagen möglichst vollumfänglich zu kontaktieren. Eine an den Lagendurchmesser angepasste nahezu vollumfängliche Umfassung stellt bei montagegerechter Reinigung der Leiteroberfläche und der Klemmkanäle eine gute, langzeitstabile elektrische Kontaktierung sicher und wirkt dabei auch noch Kriecheffekten entgegen. Die Seilklemmen weisen allgemein typischerweise zwei (Halb-) Schalen auf, die gegeneinander z.B. mit Hilfe von Schrauben verspannt sind. Die Schalen bilden dabei die Klemmkanäle aus, in denen die Leiterseile geklemmt sind.

Um den Kriecheffekten noch weiter entgegen zu wirken, sind vorzugsweise Spannscheiben insbesondere sowohl schraubenkopfseitig als auch mutterseitig mit Stahlunterlegscheiben in den Schraubenverbindungen montiert, welche die beiden Hälften der Seilklemme zusammenhalten.

Sofern vorliegend von "Seilklemme" gesprochen wird, so werden hierunter vorzugsweise einzelne Baueinheiten verstanden, welche jeweils pro Klemmkanal / Klemmbereich einen an die eine zu klemmende Lage angepassten und in der Regel über die Länge des Klemmbereichs konstanten Durchmesser aufweisen. Dies bedeutet, dass in einem jeweiligen Endbereich mehrere solcher einzelner, die Seilklemmen bildende Baueinheiten, befestigt sind.

Alternativ hierzu wird unter dem Begriff "Seilklemme" auch ein Teilbereich einer mehrstufigen und eine Baueinheit bildenden Klemme verstanden, bei der in Längsrichtung des zumindest einen Leiterseils betrachtet mehrere Klemmbereiche mit unterschiedlichen Durchmessern zum Klemmen unterschiedlicher Lagen des Leiterseils ausgebildet sind. Bei einem n-lagigen Leiterseil weist die mehrstufige Klemme beispielsweise n-Klemmstufen für n unterschiedliche Klemmdurchmesser auf. Der Klemmkanal ist daher gestuft mit unterschiedlichen Klemmdurchmessern ausgebildet, wobei in Längsrichtung zum Seilende hin die Durchmesser der Stufen abnehmen. Der parallel daneben angeordnete zweite Klemmkanal für das andere Leiterseil ist vorzugsweise ebenfalls gestuft ausgebildet, jedoch gegenläufig zu dem ersten Klemmkanal. Dies ermöglicht beispielsweise bei einem zweilagigen Leiterseil und nur einer Klemmen-Baueinheit, dass die Innenlage des ersten Leiterseils mit der Außenlage des zweiten Leiterseils, die beiden Außenlagen miteinander und die Außenlage des ersten Leiterseils mit der Innenlage des zweiten Leiterseils über einen jeweiligen Klemmbereich miteinander verbunden sind. Auch ist ergänzend eine Ausgestaltung vorgesehen, bei der in einem mittleren Klemmbereich die beiden Innenlagen und in zwei äußeren Klemmbereichen jeweils die Außenlage nur eines der Leiterseils geklemmt wird.

In bevorzugter Ausgestaltung ist jeweils zumindest eine Innenlage des einen Leiterseils mit der Außenlage des anderen Leiterseils mittels jeweils einer der Seilklemmen geklemmt und elektrisch leitend verbunden.

Zur Klemmung einer jeweiligen Innenlage ist wie bereits erwähnt allgemein vorgesehen, dass im Klemmbereich die die Innenlage umgebende nächste Lage oder die die Innenlage umgebenden nächsten Lagen entfernt sind. Ein jeweiliges Leiterseil ist daher am Ende quasi abgemantelt, d. h. eine oder mehrere der äußeren Lagen sind beispielsweise auch in mehreren sukzessiven Stufen entfernt. Vorzugsweise ist daher am jeweiligen Ende eines Leiterseils jede der Innenlagen sukzessive frei gelegt, so dass der Endbereich eine (mehrfach) gestufte Ausgestaltung aufweist. Die freigelegten Innenlagen sind über die jeweilige Seilklemme geklemmt und mit einer der Lagen, beispielsweise mit der Außenlage des anderen Leiterseils elektrisch kontaktiert. Diese Lage des anderen Leiterseils ist in dem zweiten Klemmbereich geklemmt.

So sind beispielsweise bei einem mehr als zweilagigen Aufbau zumindest zwei und vorzugsweise alle Innenlagen sowie vorzugsweise auch ergänzend die Außenlage des einen Leiterseils mit jeweils einer Seilklemme geklemmt und mit einer jeweiligen Lage, vorzugsweise mit der Außenlage des anderen Leiterseils verbunden.

In zweckdienlicher Ausgestaltung ist bei einer Variante mit zumindest zwei und vorzugsweise mit zumindest oder genau drei Innenlagen vorgesehen, dass eine Innenlage des einen Leiterseils mit einer Innenlage des anderen Leiterseils über eine jeweilige Seilklemme elektrisch kontaktiert ist. Vorzugsweise sind dabei die äußersten Innenlagen miteinander elektrisch kontaktiert.

Bevorzugt werden bis zu einem dreilagigen Leiterseil die Innenlagen nur mit der Außenlage des anderen Leiterseils verbunden. Bei einem Leiterseil mit insgesamt oder zumindest vier Lagen, also zumindest oder genau drei Innenlagen, sind in bevorzugter Ausgestaltung die inneren Innenlagen jeweils mit der Außenlage des anderen Leiterseils verbunden und die äußersten Innenlagen der beiden Leiterseile sind miteinander verbunden. Bevorzugt ist hierbei keine direkte Kontaktierung zwischen den beiden Außenlagen vorgesehen.

Vorzugsweise sind gleiche Innenlagen, also Innenlagen einer gleichen Stufe miteinander verbunden. Derartige gleiche Innenlagen oder Innenlagen gleicher Stufe weisen dabei einen gleichen Lagendurchmesser auf. Durch die endseitige sukzessive Freilegung und Abmantelung der Innenlagen weist das Seilende allgemein eine gestufte Ausgestaltung auf, wobei in einer jeweiligen Stufe eine jeweilige Innenlage freigelegt ist. Die erste Stufe definiert dabei die erste, innerste Innenlage, die zweite Stufe definiert die diese erste Innenlage umgebende zweite Innenlage, die dritte Stufe die diese wiederum umgebende (Innen-) Lage usw. Die letzte Stufe wird jeweils durch die Außenlage gebildet.

Wie bereits erwähnt sind vorzugsweise zwei Gruppen von mehreren Seilklemmen vorgesehen. Eine jede Gruppe ist in einem Endbereich des jeweiligen Leiterseils angeordnet. Neben dem Endbereich weist das jeweilige Leiterseil einen Zwischenbereich auf, wobei in der Regel die eine Gruppe den Endbereich des ersten Leiterseils und den Zwischenbereich des zweiten Leiterseils klemmt und die andere Gruppe den Endbereich des zweiten Leiterseils und den Zwischenbereich des ersten Leiterseils klemmt. Die Endbereiche sind dabei typischerweise jeweils gestuft ausgebildet, d. h. in den Endbereichen ist zumindest eine und sind vorzugsweise alle Innenlagen freigelegt.

In dem Zwischenbereich ist gemäß einer ersten Ausführungsvariante keine Innenlage frei gelegt.

Alternativ kann auch der Zwischenbereich sich in einen Bereich erstrecken, in dem eine Innenlage freigelegt ist. Diese zweite Variante ist insbesondere bei mehr als zweilagigen oder mehr als dreilagigen Leiterseilen vorgesehen. Bei diesen erfolgt dann über zumindest eine der Seilklemmen eine unmittelbare Kontaktierung zwischen zwei Innenlagen.

In bevorzugter Weiterbildung weist zumindest eines der Leiterseile und weisen vorzugsweise beide Leiterseile am Ende eine insbesondere abgerundete Endkappe auf.

Ergänzend oder alternativ sind in bevorzugter Ausgestaltung weiterhin für zumindest eines und vorzugsweise für beide Leiterseile ein oder mehrere Zwischenkappen vorgesehen, die ein jeweiliges Ende einer Lage an Drähten überdeckt. Wie bereits zuvor erwähnt, weist ein jeweiliger Endbereich des Leiterseils durch die freigelegten Innenlagen eine gestufte Ausgestaltung auf, sodass also sukzessive die Innenlagen freigelegt sind. Dies bedeutet zugleich, dass die Lage, die die freigelegte Lage umgibt an dieser Stufe endet. Über diese Zwischenkappe werden daher die Stirnenden der Drähte eines jeweiligen Lagenendes überdeckt und umschlossen. Eine derartige Zwischenkappe weist daher ein zentrales Loch auf, durch welches die freigelegte Innenlage hindurchgeführt ist. Die zuvor erwähnte Endkappe ist endseitig auf der letzten freigelegten Innenlage angebracht und verschließt die (verbleibende) Stirnseite vollständig.

Durch die Endkappe sowie die Zwischenkappe, die vorzugsweise gerundet ausgebildet sind, sind daher jeweils die endseitigen Stirnseite der Drähte der einzelnen Lagen überdeckt. Dies dient an den abgemantelten Stellen zur Vermeidung von elektrischen Teilentladungen (Korona-Entladungen), wodurch auch Geräuschemissionen vermieden sind. Diese Kappen werden vorzugsweise jeweils auf die jeweilige Lage aufgepresst. Hierzu ist allgemein ein geeignetes Werkzeug, speziell ein handbetätigtes Werkzeug vorgesehen.

In bevorzugter Weiterbildung ist weiterhin zumindest eine Kühlspirale um zumindest eines der Leiterseile angeordnet, wobei die Kühlspirale in thermisch leitenden Kontakt mit dem Leiterseil steht. Bei der Kühlspirale handelt sich insbesondere um ein Spiralelement aus einem thermisch gut leitenden Werkstoff, speziell aus einem Metall, welches in einem Bereich der Seilverbindung um zumindest eines der Leiterseile herum aufgefädelt ist. Die Kühlspirale kann dabei grundsätzlich in einem überlappenden Abschnitt auch beide Leiterseile umgeben. Vorzugsweise umgibt die Kühlspirale jedoch jeweils nur ein einzelnes Leiterseil und liegt eng in unmittelbaren thermisch leitenden Kontakt an dem Leiterseil an. Die Kühlspirale kontaktiert dabei typischerweise lediglich die Außenlage eines Leiterseils. Die Kühlspirale ist bevorzugt lediglich über einen begrenzten Abschnitt um das Leiterseil im Bereich der Seilverbindung angeordnet. So ist eine derartige Kühlspirale beispielsweise in einem Abschnitt zwischen zwei Seilklemmen angeordnet und/oder ergänzend in einem Abschnitt vor einer ersten Seilklemme der Seilverbindung (erste Seilklemme für ein jeweiliges Leiterseil betrachtet in Richtung zum Seilende hin).

Die Aufgabe wird gemäß der Erfindung weiterhin gelöst durch ein Set bestehend aus mehreren Seilklemmen für die zuvor beschriebene Seilverbindung zwischen den beiden Leiterseilen. Unter Set wird vorliegend eine Gruppe von Seilklemmen des gleichen Typs und vorzugsweise von unterschiedlichen Typen verstanden, die für eine jeweilige einzelne Seilverbindung erforderlich sind. Ein derartiges Set wird daher beispielsweise als Verkaufseinheit angeboten und abgegeben. Das Set weist dabei von zumindest einem Typ und vorzugsweise von allen im Set enthaltenen unterschiedlichen Typen jeweils ein Paar auf.

Das Set umfasst hierzu zunächst eine Seilklemme eines ersten Typs, welcher zwei Klemmbereiche mit unterschiedlichen Klemmdurchmessern aufweist, wobei der eine Klemmbereich einen ersten Klemmdurchmesser und der andere Klemmbereich einen zweiten, größeren Klemmdurchmesser aufweist. Der erste Klemmdurchmesser ist dabei dem Innendurchmesser einer Innenlage des Leiterseils angepasst, sodass eine Klemmung dieser Innenlage ermöglicht ist. Der zweite Klemmdurchmesser ist dem Außendurchmesser der Außenlage des Leiterseils angepasst, sodass diese in dem entsprechenden Klemmbereich zuverlässig geklemmt werden kann. Der Begriff "Innendurchmesser" definiert vorliegend einen Durchmesser der jeweiligen Innenlage.

In bevorzugter Weiterbildung weist das Set mehrere unterschiedliche Typen an Seilklemmen auf. Der zumindest eine weitere Typ ist aus den folgenden Typen ausgewählt. Speziell weist das Set drei oder vier oder auch mehr unterschiedliche Typen auf. Die Anzahl der unterschiedlichen Typen hängt dabei insbesondere auch von der Anzahl der Lagen der eingesetzten Leiterseile ab.

Ein zweiter Typ der Seilklemme weist zwei Klemmbereiche mit gleichem Klemmdurchmesser auf, welcher einem der Innendurchmesser einer der Innenlagen angepasst ist, so dass also Innenlagen der gleichen Stufe und daher mit gleichem Innendurchmesser geklemmt werden können.

Ein dritter Typ der Seilklemme weist Klemmbereiche auf, welche an unterschiedliche Innendurchmesser angepasst sind. Der dritte Typ Seilklemme dient daher zum Verbinden von unterschiedlichen Innenlagen.

Ein vierter Typ der Seilklemme weist Klemmbereiche auf, die an einen Innendurchmesser sowie an den Außendurchmesser angepasst sind und dient daher zum Verbinden einer Innenlage mit einer Außenlage.

Ein fünfter Typ der Seilklemme weist einen Klemmbereich auf, welcher an den ersten Innendurchmesser oder den zweiten Innendurchmesser und der andere Klemmbereich an den dritten Innendurchmesser angepasst ist. Dieser Typ wird daher bei zumindest vierlagigen Leiterseilen eingesetzt. Der fünfte Typ weist dabei zwei Untertypen auf, wobei der eine Untertyp zur Verbindung der innersten Innenlage mit der dritten Innenlage und der andere Untertyp zur Verbindung der zweiten Innenlage mit der dritten Innenlage ausgebildet ist.

Bei einem sechsten Typ der Seilklemme sind die beiden Klemmbereiche an den Außendurchmesser angepasst. Bei diesem Typ handelt es sich daher um eine herkömmliche Seilklemme, mit der die Außenlagen der beiden Leiterseile miteinander verbunden werden.

Je nach Aufbau der Leiterseile kann das Set dabei aus unterschiedlichen Typen zusammengesetzt sein.

So besteht das Set bei einer zweilagigen Ausbildung des Leiterseils bevorzugt aus zwei Seilklemmen des ersten Typs (Verbindung zwischen Innenlage zur Außenlage) und einer, zwei oder auch mehreren Seilklemmen des sechsten Typs (Verbindung der Außenlage miteinander).

Bei einer dreilagigen Ausbildung besteht das Set vorzugsweise aus zwei Seilklemmen des ersten Typs (Verbindung der innersten Innenlage mit der Außenlage), zwei Seilklemmen des vierten Typs (Verbindung der zweiten Innenlage mit der Außenlage) sowie einer oder zwei Seilklemmen des sechsten Typs (Verbindung der beiden Außenlagen).

Bei einer vierlagigen Ausbildung besteht das Set vorzugsweise aus zwei Seilklemmen des ersten Typs (Verbindung der innersten Innenlage mit der Außenlage), zwei Seilklemmen des vierten Typs (Verbindung der zweiten Innenlage mit der Außenlage) sowie zwei Seilklemmen des zweiten Typs (Verbindung der dritten Innenlagen der beiden Leiterseile miteinander).

Ausführungsbeispiele der Erfindung werden nachfolgend anhand der Figuren näher erläutert. Diese zeigen:
- Fig.1: eine ausschnittsweise Darstellung einer Freileitung im Bereich einer herkömmlichen Seilverbindung,
- Fig. 2: eine schematische Darstellung der Stromverteilung bei einer herkömmlichen Seilverbindung,
- Fig. 3: eine schematische Darstellung der Stromverteilung bei einem Ausführungsbeispiel einer erfindungsgemäßen Seilverbindung bei einem zweilagigen Leiterseil,
- Fig. 4: eine schematische Darstellung eines Ausführungsbeispiels einer erfindungsgemäßen Seilverbindung bei einem dreilagigen Leiterseil,
- Fig. 5: eine schematische Darstellung eines Ausführungsbeispiels einer erfindungsgemäßen Seilverbindung bei einem vierlagigen Leiterseil,
- Fig. 6A: eine Stirnansicht auf eine Seilklemme mit zwei Klemmbereichen mit unterschiedlichen Klemmdurchmesser,
- Fig. 6B: eine Schnittansicht durch die Seilklemme gemäß Fig. 6A
- Fig. 6C: eine Aufsicht auf die Seilklemme gemäß Fig. 6A mit den beiden geklemmten Leiterseilen,
- Fig. 7: eine vereinfachte Darstellung einer Seilverbindung mit Kühlspiralen,
- Fig. 8A: eine Darstellung eines Seilendes mit einer Endkappe,
- Fig. 8B: eine Darstellung eines abgestuften Seilendes mit einer Zwischenkappe, sowie
- Fig. 9: eine Seilverbindung, die als Abzweig ausgestaltet ist.

In der Figur 1 ist die eingangs beschriebene herkömmliche Seilverbindung 10 dargestellt.

Die Stromverteilung bei einer derartigen herkömmlichen Seilverbindung ist anhand der Figur 2 illustriert. Bei den Leiterseilen 12 handelt es sich um ein 2-lagiges Leiterseil 12 mit einer ersten Innenlage 22A und einer Außenlage 24. Die herkömmlich eingesetzten Seilklemmen 18 verbinden jeweils lediglich die Außenlagen 24 miteinander. Dies führt bei hohen Querwiderständen zwischen den Lagen dazu, dass sich der gesamte oder nahezu der gesamte Stromfluss in den Außenlagen 24 konzentriert und die Innenlagen 22A im Bereich der Seilverbindung nicht oder nur geringfügig zur Stromleitung beitragen. Die Bereiche des (Haupt-) Stromflusses sind in der Figur 2 grau schraffiert dargestellt. In der Innenlage fließt ein geringer Reststrom, welcher an den Seilklemmen 18 einen hohen Querwiderstand zwischen den Lagen überwinden muss, so dass eine hohe Verlustleistung erzeugt wird und die Seilklemmen 18 thermisch belastet werden. Diese inhomogene Stromverteilung führt insgesamt auch zu einer erhöhten Belastung der Außenlagen 24, was zu höheren Temperaturen und zu höheren Widerständen führt.

Figur 3 zeigt eine erfindungsgemäße Ausgestaltung, die anhand von 2-lagigen Leiterseilen 12 illustriert ist: Zunächst ist in den Endbereichen 16 die Innenlage 22A freigelegt, d. h. die Außenlage 24 ist im Bereich des Seilendes entfernt. In diesem Endbereich 16 ist jeweils eine Seilklemme 18 eines ersten Typs angebracht, welche die Innenlage 22A des einen Leiterseils mit der Außenlage 24 des anderen Leiterseils 12 unmittelbar elektrisch verbindet. In einem Zwischenbereich 26 ist zumindest eine (vorzugsweise zwei) weitere Seilklemme 18 eines sechsten Typs angebracht, welche die beiden Außenlagen 24 unmittelbar elektrisch miteinander verbindet. Für die unmittelbare elektrische Verbindung klemmt die jeweilige Seilklemme 18 dabei die jeweilige Lage. Im Falle der Seilklemme 18 des ersten Typs weist diese daher unterschiedliche Klemmdurchmesser zum einen für die Innenlage 22A und zum anderen für die Außenlage 24 auf.

Anhand der grauen Schraffur in Figur 3 ist zu erkennen, dass der Strom der Außenlage 24 (hellgrau gekennzeichnet, Stromrichtung durch Pfeil angedeutet) von dem ersten Leiterseil 12 über die (in Stromrichtung betrachtet) erste Seilklemme 18 in die Innenlage 22A des zweiten Leiterseils 12 übergeht, an der zweiten Seilklemme 18 geht der Reststrom der Außenlage 24 des ersten Leiterseils 12 auf die Außenlage 24 des zweiten Leiterseils 12 über. An der dritten Seilklemme 18 geht der Strom der Innenlage 22A (schraffiert gekennzeichnet) des ersten Leiterseils 12 in die Außenlage 24 des zweiten Leiterseils 12 über und addiert sich mit dem Strom der an der zweiten Seilklemme18 in die Außenlage 24 des zweiten Leiterseils 12 übergegangen ist (dunkelgrau gekennzeichnet).

Die Anzahl der Seilklemmen 18 kann dabei variiert und an die jeweilige Schlaufenverbindung sowie den Leiterseilen 12 angepasst werden, wie dies beispielhaft nachfolgend im Zusammenhang mit einem dreilagigen und einem vierlagigen Leiterseil 12 beispielhaft dargestellt wird. Grundsätzlich lässt sich die hier beschriebene Seilverbindung 10 an beliebig viellagige Leiterseile anpassen.

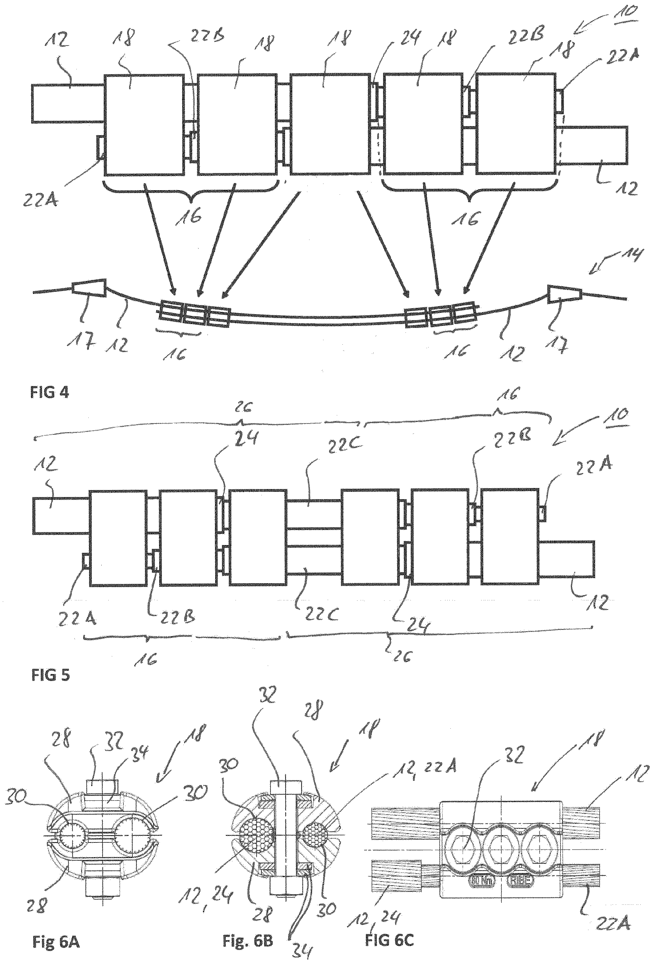

Figur 4 zeigt in der oberen Bildhälfte eine Ausführungsvariante bei einem 3-lagigen Seilaufbau, welcher also zusätzlich eine zweite Innenlage 22B aufweist. Bei dieser Ausführungsvariante ist eine zusätzliche dritte Seilklemme 18 eines vierten Typs vorgesehen, bei der die freigelegte zweite Innenlage 22B mit der Außenlage 24 des anderen Leiterseils 12 kontaktiert ist.

Die einzelnen Lagen des jeweiligen Leiterseils 12 weisen dabei unterschiedliche Anzahlen an Einzeldrähten auf, wobei die Anzahl der Einzeldrähte von der Innenlage 22A zur Außenlage 24 zunimmt. Ein 3-lagiges Leiterseil 12 weist beispielsweise insgesamt 54 einzelne Drähte auf, wobei die erste Innenlage 22A insgesamt 12 Drähte aufweist, die zweite Innenlage 22B insgesamt 18 Innendrähte und die Außenlage 24 Drähte. Über die Seilklemme 18 des ersten Typs werden daher 24 Drähte der Außenlage 24 mit 12 Drähten der ersten Innenlage 22A verbunden, mit der Seilklemme des vierten Typs werden 24 Drähte der Außenlage 24 mit 18 Drähten der zweiten Innenlage 22B verbunden und mit der Seilklemme 18 des sechsten Typs werden die 24 Drähte der Außenlagen 24 miteinander verbunden. Im Vergleich zu einer herkömmlichen Seilverbindung 10 werden daher in jedem Endbereich 16 zusätzlich insgesamt 30 Drähte der Innenlagen 22A, B mit den 24 Drähten der Außenlage 24 des anderen Leiterseils 12 verbunden.

Die obere Bildhälfte der Figur 4 dient zur Erläuterung der verschiedenen Seilklemmen 18, wobei in dieser erläuternden Darstellung fünf Seilklemmen 18 angedeutet sind. Die typische reale Einbausituation bei einer Freileitung 14 zeigt die untere Bildhälfte.

An einem jeweiligen Endbereich 16 des jeweiligen Leiterseils 12 ist jeweils eine Gruppe von Seilklemmen 18 angebracht, wobei die beiden Gruppen voneinander beabstandet sind. Jede Gruppe weist dabei (abschließend) die Seilklemmen 18 des ersten, des vierten sowie des sechsten Typs auf, wie sie zuvor beschrieben wurden.

In bevorzugter Ausgestaltung sind allgemein ein oder mehrere Abstandshalter vorgesehen, die zwischen den voneinander beabstandeten Seilklemmen 18,also insbesondere zwischen den beiden Gruppen angebracht sind. Über diese werden die beiden Leiterseile 12 in diesem Zwischenbereich auf Abstand zueinander gehalten und insbesondere parallel zueinander geführt.

Wie bereits zu der herkömmlichen Seilverbindung 10 bei einer Freileitung 14 beschrieben wurde, so sind auch die erfindungsgemäßen Seilverbindungen 10 nach Art einer Schlaufenverbindung zwischen zwei Abspannklemmen 17 ausgebildet und über eine hier nicht dargestellte Abspanneinrichtung aufgehängt. Die Seilenden der beiden Leiterseile 12 überlappen sich typischerweise über mehrere Meter hinweg.

Die Figur 5 zeigt schließlich eine Ausführungsvariante einer Seilverbindung 10 bei 4-lagigen Leiterseilen 12, bei denen also die Leiterseile 12 zusätzlich noch eine dritte Innenlage 22C aufweisen. Wie zuvor bereits bei der 3-lagigen Ausgestaltung beschrieben, sind auch hier die beiden inneren Innenlagen 22A, 22B über Seilklemmen 18, jeweils mit der Außenlage 24 des anderen Leiterseils 12 elektrisch leitend unmittelbar verbunden.

Ergänzend ist in einer Variante zusätzlich auch die jeweilige dritte Innenlage 22C mit der Außenlage 24 des anderen Leiterseils 12 verbunden.

In der in Figur 5 dargestellten bevorzugten Ausführungsvariante bei einem 4-lagigen Leiterseil 12 sind demgegenüber die dritten Innenlagen 22C der beiden Leiterseile 12 über Seilklemmen 18 eines zweiten Typs miteinander verbunden. Bei dieser Variante ist dabei hervorzuheben, dass keine unmittelbare Verbindung zwischen den beiden Außenlagen 24 der Leiterseile 12 über eine Seilklemme 18 erfolgt.

Ein solches 4-lagiges Leiterseil 12 weist beispielsweise 72 Drähte auf, mit der Abfolge 9 Drähte in der ersten Innenlage 22A, 15 Drähte in der zweiten Innenlage 22B, 21 Drähte in der dritten Innenlage 22 C und 27 Drähte in der Außenlage 24.

Der grundsätzliche Aufbau der Seilklemmen 18 geht beispielhaft aus den Figuren 6A bis 6C hervor. Die Seilklemmen 18 sind als Parallelkanalklemmen ausgebildet und weisen jeweils zwei Klemmschalen 28 auf. Für jedes Leiterseil 12 ist dabei ein kanalförmiger Klemmbereich 30 durch die beiden Klemmschalen 28 definiert, wobei jeder Klemmbereich 30 einen Klemmdurchmesser definiert. Bei der in den Figuren 6A bis 6C dargestellten Seilklemme 18 weisen die beiden Klemmbereiche 30 unterschiedliche Klemmdurchmesser auf. Speziell handelt sich bei der Seilklemme 18 um eine Seilklemme 18 des ersten Typs, bei der der eine Klemmbereich 30 an den Durchmesser der ersten Innenlage 22A und der andere Klemmbereich 30 an den Durchmesser der Außenlage 24 angepasst ist. Allgemein sind die Klemmbereiche 30 jeweils dem Durchmesser der jeweils zu klemmenden Lage angepasst. Unter "angepasst" ist hierbei ein Durchmesser zu verstehen, der derart bemessen ist, dass eine zuverlässige Klemmung der jeweiligen Lage erreicht ist. Die beiden Klemmschalen 28 sind über insbesondere mehrere Schrauben 32 gegeneinander verspannt. Bevorzugt sind zusätzliche Spannscheiben 34 vorgesehen, die insbesondere sowohl mutterseitig als auch kopfseitig, also an jeder Klemmschale 28 angebracht sind.

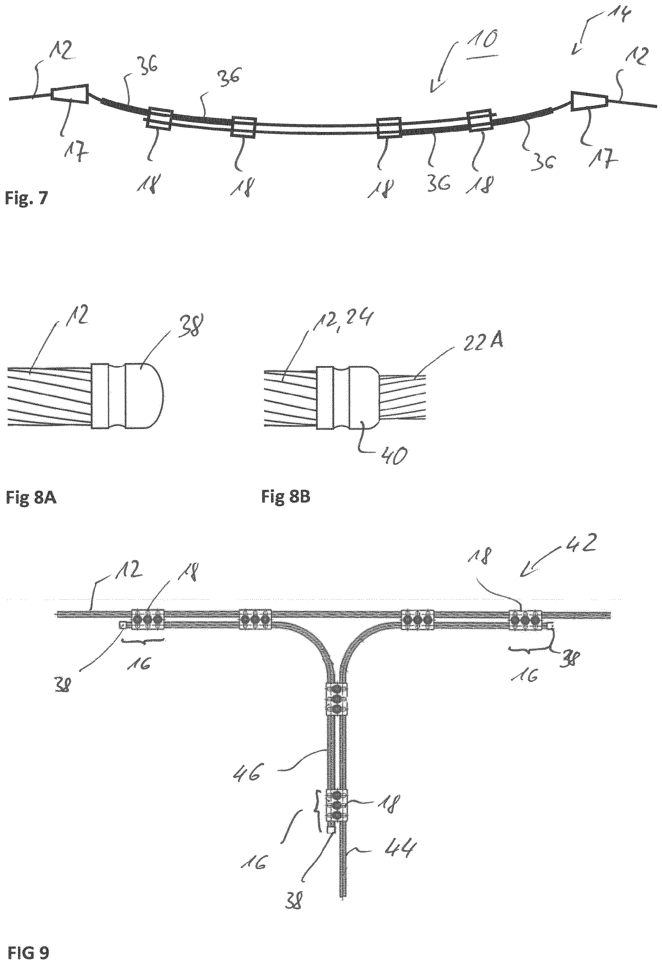

In der Figur 7 ist eine Ausführungsvariante einer Seilverbindung 10 mit Kühlspiralen 36 dargestellt. Diese werden insbesondere bei Hochtemperatur-Leiterseilen (HTLS) eingesetzt. Die Kühlspiralen 36 werden bereichsweise um ein jeweiliges Leiterseil 12 angebracht. Im Ausführungsbeispiel ist auf beiden Seiten der Seilverbindung 10 jeweils eine erste Kühlspirale 36 vor der ersten Seilklemme 18 und eine zweite Kühlspirale 36 zwischen zwei aufeinanderfolgenden Seilklemmen 18 angebracht. Die Anordnung der Kühlspiralen 36 ist nicht auf das dargestellte Ausführungsbeispiel beschränkt.

Durch die Kühlspiralen 36 wird die thermische Belastung der Seilklemmen 18 reduziert. Die Kühlspiralen 36 sind dabei vorzugsweise auf Leiterabschnitte in der Seilverbindung 10, also innerhalb der Leiterschlaufe, angebracht, welche eine Stromdichte aufweisen, die beispielsweise über der halben nominalen Stromdichte im Spannfeld, also außerhalb der Seilverbindung 10 liegt. Aus kühltechnischer Sicht ist es des Weiteren vorgesehen, die Kühlspiralen 36 unmittelbar auf die Außenlage eines Leiterseils 12 zu montieren um eine größtmögliche Oberflächenvergrößerung zu erreichen. In der Mitte der Seilverbindung 10, also insbesondere zwischen den beiden inneren, gegenüberliegenden Seilklemmen 18, ist eine Kühlung mit den Kühlspiralen 36 nicht erforderlich und auch nicht vorgesehen, da durch die speziellen Seilklemmen 18 der Betriebsstrom sich in dieser Mitte auf beide überlappende Leiterseile 12 annähernd gleichmäßig aufteilt und damit die thermische Belastung niedrig ist.

In den Figuren 8A, 8B sind eine Endkappe 38 sowie eine Zwischenkappe 40 dargestellt. Die Endkappe 38 ist endseitig auf eine Stirnende des Leiterseils 12 angebracht und überdeckt dieses. Die Endkappe 38 ist auf das Leiterseil 18 bevorzugt aufgepresst. Speziell wird diese Endkappe 38 auf eine freigelegte (innerste) Innenlage 22A des jeweiligen Leiterseils 12 aufgepresst. Die Zwischenkappe 40 ist demgegenüber an einem Ende einer (Zwischen-) Lage, beispielsweise einer der weiteren Innenlagen 22B, C oder der Außenlage 24 angeordnet und überdeckt die stirnseitigen Ende der Drähte dieser Lage. Die Zwischenkappe 40 weist kappenseitig ein zentrales Loch auf, durch welches die freigelegte Lage hindurchgeführt ist. Diese Kappen 38,40 dienen zum einen dazu, den Lagenverbund zu sichern. Zum anderen werden hierdurch Korona-Entladungen an den Drahtenden verhindert oder zumindest reduziert.

Ein weiterer Einsatzort der Seilverbindung 10 ist ein Stromabzweig 42, wie er in Fig. 9 beispielhaft dargestellt ist. Bei diesem wird an einem durchgehenden Leiterseil 12 ein abzweigendes Leiterseil 44 elektrisch und mechanisch befestigt. Hierzu ist ergänzend ein kurzes Hilfs-Leiterseil 46 vorgesehen, welches einerseits mit dem durchgehenden Leiterseil 12 und andererseits mit dem abzweigenden Leiterseil 44 verbunden ist. Das abzweigende Leiterseil 44 ist ebenfalls mit dem durchgehenden Leiterseil 12 verbunden.

Für die Verbindung der Seilenden des Hilfs-Leiterseils 46 an dem abzweigenden Leiterseil 44 sowie an dem durchgehenden Leiterseil 12 als auch für die Verbindung des Seilendes des abzweigenden Leiterseils 44 an dem durchgehenden Leiterseil 12 sind wiederum die speziellen, zuvor beschriebenen Seilklemmen 18 vorgesehen. Dies bedeutet, dass in den jeweiligen endseitigen Endbereichen 16 des Hilfs-Leiterseils 46 sowie des abzweigenden Leiterseils die zumindest eine Innenlage 22A frei gelegt und direkt mit der Seilklemme 18 geklemmt ist. Die zumindest eine Seilklemme 18 verbindet dabei die jeweils freigelegte Innenlage 22A, B, C mit der Außenlage 24 entweder des durchgehenden Leiterseils 12 oder des abzweigenden Leiterseils 44.

Wie weiterhin aus der Figur 9 zu erkennen ist, sind die einzelnen Seile 12, 44, 46 in einem mittleren Bereich beabstandet von den jeweiligen endseitigen Endbereichen 16 über weitere Seilklemmen 18 verbunden. Bei diesen handelt es sich um herkömmliche Seilklemmen 18, also Seilklemmen 18 des sechsten Typs, bei dem lediglich die Außenlagen 24 miteinander kontaktiert werden.

An den Stirnenden des Hilfs-Leiterseils 44 sowie des abzweigenden Leiterseils 44 sind jeweils Endkappen 38 angebracht.

Mit der hier beschriebenen Seilverbindung 10 wird zusammenfassend daher dem Strom von jeder Leiterlage die Möglichkeit gegeben, direkt über eine jeweilige Seilklemme 18 auf das jeweils andere Leiterseil 12,44,46 überzugehen. Die Seilverbindung 10 eignet sich dabei insbesondere für die Verbindung von zwei Leiterseilen 12 nach Art einer Schlaufenverbindung zur Ausbildung eines gesamten durchgehenden Leiterseils, welches also insbesondere zwischen zwei Abspannmasten einer Freileitung gespannt ist. Darüber hinaus eignet sich diese Seilverbindung 10 auch für Stromabzweige, bei denen ein abzweigendendes Leiterseil 44 von einem durchgehenden Leiterseil 12 abzweigt.

### Bezugszeichenliste

- 10: Seilverbindung
- 12: Leiterseil
- 14: Freileitung
- 16: Endbereich
- 17: Abspannklemme
- 18: Seilklemme
- 20: Abspannklemme
- 22A, B, C: erste, zweite dritte Innenlage
- 24: Außenlage
- 26: Zwischenbereich
- 28: Klemmschalen
- 30: Klemmbereich
- 32: Schrauben
- 34: Spannscheibe
- 36: Kühlspirale
- 38: Endkappe
- 40: Zwischenkappe
- 42: Stromabzweig
- 44: abzweigendes Leiterseil
- 46: Hilfs-Leiterseil

## Patentansprüche

1. Seilverbindung (10) insbesondere einer elektrischen Freileitung (14) zwischen zwei Leiterseilen (12, 44) mit Hilfe von mehreren Seilklemmen (18), wobei jedes der Leiterseile (12, 44) zumindest zwei konzentrisch zueinander angeordnete Lagen an Drähten aufweist, nämlich zumindest eine Innenlage (22A) und eine Außenlage (24), **dadurch gekennzeichnet, dass** über zumindest eine der Seilklemmen (18) die zumindest eine Innenlage (22A, B, C) des einen Leiterseils (12,44) geklemmt und über die Seilklemme (18) mit dem anderen Leiterseil (12) elektrisch leitend verbunden ist.

2. Seilverbindung (10) nach dem vorhergehenden Anspruch, **dadurch gekennzeichnet, dass** unterschiedliche Lagen (24, 22A, B, C) der beiden Leiterseile (12, 44) geklemmt und dadurch elektrisch miteinander verbunden sind.

3. Seilverbindung (10) nach einem der vorhergehenden Ansprüche, **dadurch gekennzeichnet, dass** mehrere, insbesondere jede Lage (24, 22A, B, C) des einen, ersten Leiterseils (12, 44) jeweils über eine jeweilige Seilklemme (18) geklemmt und über die Seilklemme (18) mit dem anderen, zweiten Leiterseil (12) verbunden sind, wobei vorzugsweise weiterhin mehrere und insbesondere alle Lagen (18, 22A, B, C) des anderen, zweiten Leiterseils (12) ebenfalls über eine jeweilige Seilklemme (18) geklemmt und mit dem ersten Leiterseil (12) verbunden sind.

4. Seilverbindung (10) nach einem der vorhergehenden Ansprüche, **dadurch gekennzeichnet, dass** jeweils zumindest eine Innenlage (22A, B, C) des einen Leiterseils (12, 44) mit der Außenlage (24) des anderen Leiterseils (12) mittels jeweils einer der Seilklemmen (18) geklemmt und elektrisch leitend verbunden ist.

5. Seilverbindung (10) nach einem der vorhergehenden Ansprüche, **dadurch gekennzeichnet, dass** zumindest zwei Innenlagen (22A, B, C) vorgesehen sind und jede der Innenlagen (22A, B, C) des einen Leiterseils (12, 44) mit einer Lage, insbesondere mit der Außenlage (24) des anderen Leiterseils (12) mittels einer der Seilklemmen (18) elektrisch leitend verbunden ist.

6. Seilverbindung (10) nach einem der vorhergehenden Ansprüche, **dadurch gekennzeichnet, dass** zumindest zwei Innenlagen (22A, B, C) vorgesehen sind und jede Innenlage (22A, B, C) eine Stufe bildet und dass die Innenlagen (22A, B, C) zumindest und vorzugsweise genau einer gleichen Stufe der beiden Leiterseile (12) miteinander mittels einer der Seilklemmen (18) elektrisch leitend verbunden sind.

7. Seilverbindung (10) nach einem der vorhergehenden Ansprüche, **dadurch gekennzeichnet, dass** ein Endbereich (16) zumindest des einen Leiterseils (12, 44) gestuft ausgebildet ist, so dass zumindest eine und vorzugsweise mehrere oder alle der Innenlagen (22A, B, C) freigelegt sind.

8. Seilverbindung (10) nach einem der vorhergehenden Ansprüche, **dadurch gekennzeichnet, dass** zwei Gruppen von mehreren Seilklemmen (18) vorgesehen sind, und jedes Leiterseil (12) endseitig einen Endbereich (16) und daran anschließend einen Zwischenbereich (26) aufweist, wobei die eine Gruppe den Endbereich (16) des einen, ersten Leiterseils (12) und den Zwischenbereich (26) des anderen, zweiten Leiterseils (12) klemmt und die andere Gruppe den Endbereich (16) des anderen, zweiten Leiterseils (12) und den Zwischenbereich (26) des ersten Leiterseils (12) klemmt.

9. Seilverbindung (10) nach einem der vorhergehenden Ansprüche, **dadurch gekennzeichnet, dass** zumindest eines der Leiterseile (12, 44) und vorzugsweise beide Leiterseile (12, 44) am Ende eine insbesondere abgerundete Endkappe (38) aufweisen.

10. Seilverbindung (10) nach einem der vorhergehenden Ansprüche, **dadurch gekennzeichnet, dass** zumindest eines der Leiterseile (12, 44) und vorzugsweise beide Leiterseile (12, 44) endseitig eine gestufte Ausbildung aufweisen, bei der die zumindest eine Innenlage (22A) freigelegt ist, wobei zumindest eine Zwischenkappe (40) mit einem zentralen Loch aufgebracht ist, und die freigelegte Innenlage (22A) durch das Loch hindurchgeführt ist.

11. Seilverbindung (10) nach einem der vorhergehenden Ansprüche, **dadurch gekennzeichnet, dass** eine Kühlspirale (36) um zumindest eines der Leiterseile (12, 44) angeordnet ist, wobei die Kühlspirale (36) in thermisch leitenden Kontakt mit dem Leiterseil (12, 44) steht.

12. Seilverbindung (10) nach einem der vorhergehenden Ansprüche, **dadurch gekennzeichnet, dass** eine jeweilige Seilklemme (18) für jedes der Leiterseile (12, 44) einen Klemmbereich (30) zum Klemmen eines Abschnitts des jeweiligen Leiterseils (12, 44) aufweist, wobei die Klemmbereiche (30) an den Durchmesser der zu klemmenden Lage angepasst sind und wobei vorzugsweise zumindest ein Teil der Seilklemmen (18) Klemmbereiche (30) mit unterschiedlichen Durchmessern aufweist.

13. Set bestehend aus mehreren Seilklemmen (18) für eine Seilverbindung (10) zwischen zwei Leiterseilen (12, 44) nach einem der vorhergehenden Ansprüche, wobei die Leiterseile (12, 44) zumindest eine Innenlage (22A) mit einem Innendurchmesser und eine Außenlage (24) mit einem Außendurchmesser aufweisen und eine jeweilige Seilklemme (18) zwei parallel zueinander angeordnete Klemmbereiche (30) für jeweils eines der Leiterseile (12, 44) aufweist, wobei
a) eine Seilklemme (18) eines ersten Typs vorgesehen ist, bei der der eine Klemmbereich (30) an den Innendurchmesser und der andere Klemmbereich (30) an den Außendurchmesser angepasst ist.

14. Set bestehend aus mehreren Seilklemmen nach dem vorhergehenden Anspruch, wobei ein jeweiliges Leiterseil (12, 44) zumindest zwei Innenlagen (22A, B) mit einem ersten und einem zweiten Innendurchmesser sowie gegebenenfalls eine dritte Innenlage (22C) mit einem dritten Innendurchmesser aufweist und zumindest einer und vorzugsweise mehrere der nachfolgenden Typen vorgesehen sind
b) eine Seilklemme (18) eines zweiten Typs, bei der die beiden Klemmbereiche (30) einen gleichen Durchmesser aufweisen, welcher an einen der Innendurchmesser angepasst ist
c) eine Seilklemme (18) eine dritten Typs, bei der die beiden Klemmbereiche (30) an unterschiedliche Innendurchmesser angepasst sind, zum Klemmen von verschiedenen Innenlagen,
d) eine Seilklemme (18) eines vierten Typs, bei der der eine Klemmbereich (30) an den zweiten Innendurchmesser und der andere Klemmbereich (30) an den Außendurchmesser angepasst ist,
e) eine Seilklemme (18) eines fünften Typs, bei der der eine Klemmbereich (30) an den ersten Innendurchmesser oder an den zweiten Innendurchmesser und der andere Klemmbereich (30) an den dritten Innendurchmesser angepasst ist,
f) eine Seilklemme (18) eines sechsten Typs, bei der die beiden Klemmbereiche (30) an den Außendurchmesser angepasst sind.
